Europäisches Patentamt

European Patent Office

Office européen des brevets

(11) Publication number: **0 048 354**
**B1**

(12) EUROPEAN PATENT SPECIFICATION

(45) Date of publication of patent specification: **02.01.85**

(21) Application number: **81106683.6**

(22) Date of filing: **27.08.81**

(51) Int. Cl.⁴: **B 01 J 13/02, A 01 N 25/32**

(54) A marking or labeling agent.

(30) Priority: **22.09.80 US 189057**

(43) Date of publication of application:
**31.03.82 Bulletin 82/13**

(45) Publication of the grant of the patent:
**02.01.85 Bulletin 85/01**

(84) Designated Contracting States:
**BE DE FR GB IT NL**

(56) References cited:
**FR-A-2 344 225**
**GB-A-2 026 513**
**US-A-3 317 433**

**CHEMICAL ABSTRACTS, volume 79, no. 17,
October 29, 1973, page 248, abstract 103014t
COLUMBUS OHIO (US)**

(73) Proprietor: **PENNWALT CORPORATION
Pennwalt Building Three Parkway
Philadelphia Pennsylvania 19102 (US)**

(72) Inventor: **Koestler, Robert C.
640 Trephanny Lane
Wayne Pennsylvania 19087 (US)**

(74) Representative: **Kraus, Walter, Dr. et al
Patentanwälte Kraus & Weisert Irmgardstrasse
15
D-8000 München 71 (DE)**

Courier Press, Leamington Spa, England.

# Description

This invention is related to a marking or labeling agent comprising a microencapsulated material, said material being at least partially incorporated within the polymer walls of said microcapsules, said material being capable of being released from said walls upon thermal treatment of said microcapsules, and said material being detectable in the gas phase. The invention is also related to the use of these marking or labeling agents in a marking process.

Microencapsulated marking and labeling agents are produced which have been microencapsulated in such a fashion that at least a sensible portion of the agent is incorporated into the capsule wall structure of the microcapsules. Such materials have great potential for use as marking or labeling agents especially for employment concomitantly with certain chemical species having the potential for injury to mammals upon accidental ingestion or exposure such as some herbicides. Additionally, such marking and labeling agents may be employed directly, that is, they may be employed as designating or marking agents per se. Such microencapsulated marking or labeling agents may further be characterized as being capable of being released upon exposure to heat or upon smoldering. Such materials are, accordingly, especially suitable for use as making materials for objects which may be subjected to thermal processing less than full combustion.

From US—A—3 317 433 there are known heat-rupturable microcapsules of minute size which can contain a marking material. The rupture is caused by the production of gas from materials incorporated in the capsule wall and in the core material entities, respectively.

In GB—A—2 026 513 there is described a process for preparing microcapsules of solid organopolysiloxane from a starting material which can contain mercaptoalkyl hydrogen. The material to be microencapsuled includes odorants and herbicides. This material can be dispersed throughout the solid organopolysiloxane.

Finally, a composition comprising a herbicide and an odorant is described in GB—A—1 574 600 (corresponding to FR—A—2 344 225).

The object of the present invention is to provide marking or labeling materials maintaining a high level of residual marking potential over a considerable period.

According to the present invention, this object is achieved by partially immobilizing chemically the microencapsulated material in the walls of the microcapsules.

US—A—3 577 515 and 3 959 464 provide an excellent overview of interfacial polycondensation techniques for the production of microencapsulated materials including the marking or labeling agents of the present invention. US—A—4 102 800 discloses the microencapsulation of vulcanizing agents including phenol sulfides.

In general, microencapsulation is accomplished by inter-facial polymerization. Thus, a dispersion of droplets containing the material to be encapsulated is established in a liquid medium which is immiscible with the droplets. These droplets further contain the first of two speices which will react together to form the polymerized capsule wall. Thereafter, a second species, which will react with the first to form the cell wall of the capsule, is introduced into the liquid medium under conditions which are such that the polymerization of the first and second species to form the capsule wall takes place, the wall forming at the interfaces among the suspended droplets and the suspension medium. It will be understood by those skilled in the art that more than two species may be reacted together to form the cell walls of the capsules and that such species may be incorporated in varying combinations in either of the liquid phases employed in the polymerization system as long as polymerization takes place only upon interfacial mixing. In general, at least one of the reacting species should have greater than two functionalities such that they are suitable for undergoing a polycondensation reaction to the end that cross-linking may take place during cell wall formation.

The first and second reactive species are chosen so as to be reactive with each other under the conditions prevailing during the reaction. As will be apparent to those skilled in the art from review of the Vandegaer and De-Savigny patents which have been incorporated herein by reference, many choices exist for such first and second reactive species and many possible polymeric products may result from the reaction thereof. Thus, capsule walls may comprise amide (sulfonamide, etc.), urethane, urea, ester, and many other functions. One of the means for formulating microencapsulated materials described in US—A—3 577 515 is a microencapsulation technique which results in microcapsule walls comprising polyamide-polyurea moieties. For the practice of this method, which is preferred for the practice of this invention, the first reactive species, which is that which is included with the material to be encapsulated in the suspended droplets, includes isocyanates and acyl halides. The reactive species which is introduced via the continuous liquid phase comprises at least one amine.

Microencapsulation according to US—A—3 577 515 and 3 959 464 is known to effect a diminution in the release to the environment of the species which is encapsulated. It is believed that this results from the necessity for said encapsulated species to diffuse through the polymeric capsule wall prior to release. By altering the degree of cross-linking in the cell wall, and by judicious choice of wall constituents, alteration of the diffusion rate and hence the release rate can be had within limits. In all cases, however, release of the encapsulated material is continuous, albeit possibly nonlinear, with time and decays more or less quickly to zero.

Since the middle 1970s, the government of the United States of America in cooperation with the government of Mexico has been attempting to damage or destroy illicit crops of marijuana grown in Mexico. To this end, a tasteless, oderless, colorless herbicide, Paraquat, has been sprayed upon developing marijuana fields to cause their destruction. Owners of the Mexico mariquana fields quickly appreciated that prompt harvesting of the sprayed plants and transport of the sprayed marijuana material to market would save it from being a total economic loss. Accordingly, increasing amounts of marijuana contaminated with Paraquat has been finding its way into the underground marketplaces around the world, especially in North America. Due to the lack of sensory indication of the presence of Paraquat, significant exposure of smokers of contaminated marijuana to the herbicide may result. At the present time, a continuing debate both in the Congress of the United States and generally among members of the public has taken place as to whether or not exposure to Paraquat or to contaminants associated with that herbicide can be harmful to human health. See *Pesticide and Toxic Chemical News*, December 5, 1979, pp. 13—14; *Pesticide and Toxic Chemical News*, August 8, 1979, p.12; *Newsweek*, April 30, 1979, pp. 18D—19C; *Philadelphia Inquirer,* November 12, 1978 (Associated Press). Coincident with this public debate concerning potential damage from Paraquat, there arose numerous "do it yourself" Paraquat testing kits so that users of marijuana could determine whether or not a particular batch was contaminated. At the same time, more respectable procedure were developed for the laboratory determination of Paraquat in marijuana. See *Journal of Pharmaceutical Sciences*, Vol. 67, No. 8, August 1978, open forum section.

In view of this considerable concern as to the potential for health risk in Paraquat-contaminated marijuana, it has become desirable to incorporate a marking agent in the herbicidal solutions used to spray marijuana fields. Both dyes and odorant marking materials have been proposed for such use but none has been found likely to be effective. Indeed, certain of the mercaptan species which are suitable for use in the practice of this invention were proposed as olfactory marking agents, but their lack of persistency caused them to be rejected. See *Newsweek*, April 30, 1979, pp. 18D—19C; and *Pesticide and Toxic Chemical News*, August 8, 1979 "Safe 'marker' for hazardous herbicide not yet available" by Califano, Secretary of HEW.

The present invention provides a uniquely persistent marking agent which will selectively liberate a marking material into the surroundings in response to a preselected liberation stimulus. This is accomplished by incorporating the subject marking material into the walls of microcapsules which retain substantial amounts of the marking material until caused to release the same through application of a liberation stimulus. Thus, said walls are believed to coact with said marking materials to enable such liberation after a relatively long period of exposure to the environment.

These agents are micro-encapsulated in such a fashion that they are at least partially chemically incorporated or immobilized within the microcapsule wall structure. Such micro-encapsulated agents may be released from entrapment within the microcapsules not only by diffusion of unincorporated agent through the capsule wall in the normal fashion, but also by liberation of the immobilized, incorporated agent from the wall chemical structure. Such liberation may take place upon exposure to a preselected stimulus. For example, heat treatment such as thermal or radiant heating or other non-mechanical processing of compositions employing these microencapsulated agent materials may be employed. A breakdown of the microcapsule walls is believed to accompany such liberation.

Among the beneficial effects of such a two stage release mechanism is the accomplishment of greater marking or labeling persistency of the materials employing partial incorporation of labeling agents into the microcapsule wall structures. This may be appreciated when it is understood that diffusion of most microencapsulated species through microcapsule walls is substantially complete in a relatively short time. Materials which are partially incorporated into the microcapsule walls cannot totally diffuse from the capsules but, rather, are partially immobilized chemically in the walls until thermal or other degradation of the wall structure releases them. Accordingly, such materials maintain a high level of residual marking potential when compared with microencapsulated materials which have not been partially incorporated into the cell walls.

The marking or labeling agents of the present invention comprise any composition capable of being detected in the gas phase which, to a sensible degree, has been chemically incorporated into a polymer comprising a microcapsule wall. As will be more fully set forth below, such agents are, in general, polyfunctional, having two or more functional groups capable of forming covalent bonds as part of a microcapsule wall polymer. While such agents are, according to a preferred embodiment, detectable in the gas phase by olfaction by animals, any agent detectable by any means when released from the microcapsule walls is suitable. Accordingly, volatile agents detectable in the gas phase by visualization, by aroma, by taste, by spetrometry, by chemical reaction or by any other sensing means employing animals or otherwise may be suitable for employment in one or many embodiments of this invention. Similarly, while polyamide-polyurea microencapsulation systems are preferred for use in this invention, any chemical system capable of incorporating sensible amounts of marking or labeling agents is suitable.

Such deliberate incorporation of microencapsulated agent into the walls of microcapsules is directly contrary to the microencapsulation technology heretofore practiced. Conventional wisdom in the field teaches that the object of microencapsulation is to provide a pool of material interior to the microcapsules for subsequent diffusion through the capsule wall. No suggestion of intentional incorporation of encapsulated agent into the microcapsule walls for subsequent liberation by a preselected liberation stimulus such as heat has been made.

According to a preferred embodiment of this invention, persistent, effective olfactory marking agents may be formulated employing microencapsulated polyfunctional mercaptans. These microencapsulated polyfunctional mercaptans may be sprayed on marijuana or on other crops along with Paraquat or other agricultural chemicals to result in marking of the plant material with an odiferous material which cannot be ignored. More particularly, smoking of marijuana which has been contaminated with the microencapsulated polymercaptans of the present invention results in the release of intense, foul odors to such an extent that such marijuana is incapable of being tolerated. Such marking has good persistency. The marking agents, according to this preferred embodiment, may be used in other areas as well. Thus, condemned grain or other crops such as peanuts, soybeans, etc. may be marked employing these materials. Additionally, contaminated goods of all sorts may be so indicated by coating, spraying, or otherwise exposing them to solutions or compositions comprising the microencapsulated mercaptans of the present invention.

As has been suggested above, the microencapsulation of polyfunctional mercaptans according to this invention is believed to result in mercaptans which are not only contained within microcapsules but which are, to a sensible degree, part of the polymeric capsule walls. It is thus believed that this incorporation into the polymer causes significant immobilization of the mercaptan and substantial removal of the mercaptan thus immobilized from the pool available for diffusion through the capsule wall and for subsequent vaporization. Accordingly, it is believed that when the pool of mercaptan which has not been immobilized has been lost due to volatilization that the immobilized portion still remains for a substantial period of time. This portion may be released during decomposition or degradation of the capsule walls such as by smoldering.

In general, heat treatment at temperatures substantially greater than room temperature but less than full combustion will effect release of the immobilized mercaptan to result in a marking oder. Full combustion is believed to result in significant destruction of the mercaptan, thus leading to diminished effectiveness. Accordingly, smoldering and other at least partially non-combustive forms heating such as smoking, cooking, baking, roasting, toasting, etc. may serve to liberate the immobilized mercaptan.

According to a preferred embodiment, the microencapsulation processes described in US—A—3 577 514 and 3 959 464 which employ isocyanate-acyl halide-amine reaction systems to yield polyamide-polyurea microcapsules is used for the microencapsulation of polyfunctional mercaptans to yield persistent olfactory marking agents. It is believed that the polyfunctional mercaptans are actually incorporated, at least in sensible part, into the cell wall structure of the microcapsules according to these procedures. Other encapsulation systems which incorporate polyfunctional mercaptans into the capsule walls are also suitable as will be appreciated by those skilled in the art.

Polyfunctional mercaptans which are suitable for use in one or more embodiments of the present invention comprise any mercaptan, having two or more sulfhydryl (also called thiol) functionalities, which are capable of reacting to a sensible extent with forming polyamide-polyurea cell wall polymeric systems. In view of the fact that materials formulated according to the practice of this invention will be useful for olfactory marking agents, it is desirable that the polyfunctional mercaptans thus employed be capable of olfactory perception. In general, such materials have a strong, disagreeable odor. As will be apparent to those skilled in the art, polyfunctional mercaptans suitable for use with this invention must possess an appreciable volatility upon smoldering. Those skilled in the art will recognize that volatility is related in an approximate sense to overall molecular weight of the molecules in question. As a general rule, polyfunctional mercaptans having a molecular weight of less than about 1,000 are suitable for use in one or more embodiments of the present invention.

It is well within the routine and ordinary skill of those skilled in the art to determine which polyfunctional mercaptans and other marking agents are suitable for microencapsulation according to this invention. Thus, the requirement that such agents be capable of at least sensible inclusion in the polymeric cell walls of the microcapsules and that they be capable of sensible volatilization during smoldering, may readily be determined. In general, microencapsulated polyfunctional mercaptans which have been incorporated into microcapsules to a sensible degree will still be olfactorally detectable upon smoldering after at least 14 and usually at least 21 days' exposure to the elements. Thus, the microencapsulated polyfunctional mercaptan to be tested is spread upon a filter paper disk and exposed to the elements for 14 days. This disk is subsequently, heated to smoldering and the presence or absence or offensive oder determined.

As a general rule, nearly all di-, tri-, and higher functional mercaptans which have molecular weights below about 1,000 are suitable for use in this invention except, possibly, for those mercaptans which have highly hindered sulfhydryl functions. Among those polyfunctional mercaptans which are suitable for use in this invention are, for example: 1,4-butanedithiol; 1,2-ethanedithiol; 1,6-hexanedithiol; 2,3-dimercapto-1-propanol; 3,4-dimercapto-toluene; 2,5 - dimercapto - 1,3,4 - thiadiazole; durene-alpha; alpha'-dithiol; 4-chloro-m-benzenedithiol; 1,2,3-trimercaptopropane; 1,3 - dimercapto 3 - propanol; 1,10 - decanedithiol; 2,4-dimercaptooctafluorobiphenyl; 1,9-nonanedithiol; 1,3-propanedithiol; alpha, alpha'-dimercapto-p-xylene; 2,4-dimercapto-5-methylpyrimidine; and 2,5-dimercapto-1,3,4-thiadizaole: Especially useful polyfunctional mercaptans are d-limonene dimercaptan and n-nonanedithiol, both of which are preferred; one of these, d-limonene dimercaptan (DLDM) has been found to be the best olfactory marking agent for the practice of this invention. DLDM may be readily secured through the process described in US—A—3,616,374. DLDM may be incorporated in sensible degree into the polymeric cell walls of microcapsules formed from polyamide-polyurea systems and is possessed of a pronounced disagreeable odor. Such microencapsulated DLDM has excellent persistence in the environment and can be detected upon smouldering at least five weeks after initial exposure.

Among the other polyfunctional mercaptans which are suitable for use in the invention, n-nonanedithiol; 1,4-butanedithiol; dimercaptopropanol; 4-chloro-m-benzenedithiol; 1,6-hexanedithiol; durene alpha, alpha'-dithiol, alpha, alpha'-dimercapto-p-xylene; 2,4-dimercapto-5-methylpyrimidine; and 2,5-dimercapto-1,3,4-thiadiazole are believed to be highly suitable.

Certain data included in some of the examples which follow have been developed in cooperation with the U.S. Department of State during the course of a joint, confidential development inquiry. Certain experimental samples of microencapsulated polyfunctional mercaptans according to one or more embodiments of the present invention have been furnished to the U.S. Department of State pursuant to a confidential agreement dated February 7, 1979. These samples are believed to have been used in field tests conducted domestically and in Mexico directed at perfecting techniques for the interdiction of illicit marijuana.

Example 1: Tests with unencapsulated materials

Four materials were evaluated as odorants in a preliminary study. These materials were tert-dodecyl mercaptan, 2-mercaptoethanol, mercaptopropionic acid and d-limonene dimercaptan. The compounds were solubilized in acetone to a concentration of 5 parts per 1000 ($\frac{1}{2}$%). Whatman No. 2 filter paper Disks, 9 centimeters in diameter were saturated with the respective solutions and dried at atmospheric conditions. Five replicas of each sample were employed. The treated filter papers disks were stapled to stakes and placed in open cold frames covered only the bird-proof netting and were, thus, exposed to the elements. All treated filter paper disks are odorous at the time of treatment and placement in the cold frames. Data were collected at two-day intervals included assaying for odor under natural (dry) conditions, wet conditions, and while smoldering. The d-limonene dimercaptan was the only material that persisted for more than two days. Filter paper treated with this material had a slight odor when wet or dry and a stong oder when smoldering. The presence of d-limonene dimercaptan could be detected for at least seven days by smoldering.

Example 2: Encapsulation of d-limonene dimercaptan

A solution of 200 g of d-limonene dimercaptan containing 21.3 g of sebacoyl chloride and 23.8g of polymethylene polyphenyl-isocyanate was added to a solution of 600 ml of water containing 3.0 g of polyvinyl alcohol. This mixture was stirred vigorously with a high shear stirrer to form a dispersion. After 15 seconds a solution of 10.7 g of ethylene diamine, 12.2 g. of diethylene triamine and 7.12 g of sodium hyroxide in 350 ml of cold water was added to accomplish the interfacial polymerization. The slurry was stirred for two hours, neutralized with HCl to approximately pH 6.5 and passed through a 50-mesh screen to remove oversize particles. The resulting mixture was thickened with a xantham gum to prevent settling. The final mixture had a concentration of approximately 15.3% d-limonene dimercaptan based on total sulfur analysis and comprised well-formed microcapsules.

Example 3: Encapsulation of n-nonane dithiol

A solution of 100 g of n-nonane dithiol containing 7.8 g of sebacoyl chloride and 2.9 g of polymethylene polyphenyl-isocyanate was added to a solution of 300 ml of water containing 1.5 g of polyvinyl alcohol and stirred vigorously with a high shear stirrer to form a dispersion. After approximately 15 seconds, a solution 2.6 g of ethylene diamine, 2.9 g of diethylene triamine and 7.12 sodium hydroxide in 25 ml of cold water was added to accomplish the polymerization. The slurry was stirred for two hours, neutralized to approximately pH 6.5 with HCl and passed through a 50-mesh screen to remove oversize particles. The resulting mixture was thickened with 0.25% xantham gum to prevent settling.

## Claims

1. A marking or labeling agent comprising a microencapsulated material, said material being at least partially incorporated within the polymer walls of said microcapsules, said material being capable of being released from said walls upon thermal treatment of said microcapsules, and said material being detectable in the gas phase, characterized by the fact that said material is partially immobilized chemically in the walls of the microcapsules.

2. The agent of claim 1 wherein said material is detectable by sensation by animals.

3. The agent of claim 2 wherein the means of detection is olfaction.

4. The agent of claim 1 wherein said thermal treatment is smoldering.

5. The agent of claims 1 to 4 wherein the microencapsulated material is a mercaptan, said mercaptan having at least two sulfhydryl groups.

6. The agent of claim 5 wherein said mercaptan is chosen from the group consisting of d-limonene di-mercaptan; n-nonanedithiol; 1,4-butanedithiol; dimercaptopropanol; 4-chloro-m-benzenedithiol; 1,6-hexanedithiol; durene alpha, alpha'-dithiol; alpha, alpha'-dimercapto- p-xylene; 2,4-dimercapto-5-methyl-pyrimidine; and 2,5-dimercapto-1,3,4-thiadiazole.

7. The agent of claim 5 wherein said mercaptan is d-limonene dimercaptan.

8. The agent of claim 5 wherein said olfactory sensation is facilitated by smoldering or exposure to non-combustive heating.

9. The agent of claims 5 to 8 wherein said mercaptan has, to a sensible degree, been incorporated into the cell wall of said microcapsules.

10. Use of the marking or labeling agent of claims 1 to 9 in a marking process comprising:

a) selecting a material which is detectable in the gas phase;

b) microencapsulating said material in such a fashion that at least part of said material is chemically incorporated into the polymer walls of said microcapsules;

c) contacting an object to be marked with said microencapsulated material; and

d) thermally treating said microcapsules, whereby said material is released from the walls of said microcapsules; and

e) detecting said material.

11. Use of the marking or labeling agent of claims 5 to 9 in a process for olfactory marking comprising:

a) identifying an object to be marked;

b) providing a marking agent comprising the microencapsulated mercaptan;

c) applying said agent to said object, whereby said object may be distinguished from objects not so marked by olfaction.

12. Use according to claim 11 wherein said object comprises herbaceous material.

13. Use according to claim 12 wherein said herbaceous material is marijuana.

14. Use according to claim 11 wherein said application accompanies the application of a herbicide.

15. Use of the marking or labeling agent of claims 5 to 9 in a method of destroying the value of marijuana comprising applying to said marijuana either admixed or separately

a) a herbicide and

b) a marking agent comprising a micro-encapsulated mercaptan.

16. A marking or labeling agent comprising a marking material, at least a portion of said material being incorporated into polymeric walls of microcapsules, characterized by the fact that said material chemically coacts with said walls such that, upon conditions of exposure to a preselected liberation stimulus, at least a portion of said material liberates a volatile, detectable composition.

## Patentansprüche

1. Markierungs- oder Etikettierungsmittel, enthaltend ein mikroeingekapseltes Material, wobei das Material mindestens teilweise in die Polymerwände der genannten Mikrokapseln einearbeitet ist, wobei das genannte Material nach thermischer Behandlung der genannten Mikrokapseln von den genannten Wänden freigesetzt werden kann und wobei das genannte Material in der Gasphase feststellbar ist, dadurch gekennzeichnet, daß das genannte Material in den Wänden der Mikrokapseln teilweise chemisch immobilisiert ist.

2. Mittel nach Anspruch 1, dadurch gekennzeichnet, daß das genannte Material durch Sinneswahrnehmung durch Tiere feststellbar ist.

3. Mittel nach Anspruch 2, dadurch gekennzeichnet, daß das Mittel der Festellung der Geruchssinn ist.

4. Mittel nach anspruch 1, dadurch gekennzeichnet, daß die genannte thermische Behandlung ein Schwelen ist.

5. Mittel nach Anspruch 1 bis 4, dadurch gekennzeichnet, daß das mikroeingekapselte Material ein Mercaptan ist, wobei das genannte Mercaptan mindestens zwei Sulfhydrylgruppen aufweist.

6. Mittel nach Anspruch 5, dadurch gekennzeichnet, daß das genannte Mercaptan aus der Gruppe d-Limonendimercaptan, n-Nonandithiol, 1,4-Butandithiol, Dimercaptopropanol, 4-Chlorm-benzoldithiol, 1,6-Hexandithiol, Duren-$\alpha,\alpha'$-dithiol, $\alpha,\alpha'$-Dimercapto-p-xylol, 2,4-Dimercapto-5-methylpyrimidin und 2,5-Dimercapto-1,3,4-thiadiazol ausgewählt ist.

7. Mittel nach Anspruch 5, dadurch gekennzeichnet, daß das genannte Mercaptan d-Limonendimercaptan ist.

8. Mittel nach Anspruch 5, dadurch gekennzeichnet, daß die genannte Sinneswahrnehmung durch den Geruchssin durch Schwelen oder Aussetzen an nicht-verbrennendes Erhitzen erleichtert wird.

9. Mittel nach Anspruch 5 bis 8, dadurch gekennzeichnet, daß das genannte Mercaptan bis zu einem wahrnehmenden Ausmaß in die Zellwand der genannten Mikrokapseln eingearbeitet worden ist.

10. Verwendung des Markierungs- oder Etiketteirungsmittels der Ansprüche 1 bis 9 bei einem Markierungsprozeß, der folgendes umfaßt:

a) Auswahl eines Materials, das in der Gasphase feststellbar ist,
b) Mikroeinkapselung des genannten Materials in einer solchen Weise, daß mindestens ein Teil des genannten Materials chemisch in die Polymerwände der genannten Mikrokapseln eingearbeitet ist,
c) Kontaktierung eines zu markerenden Gegenstands mit dem genannten mikroeingekapselten Material und
d) thermische Behandlung der genannten Mikrokapseln, wodurch das genannte Material aus den Wänden der genannten Mikrokapseln freigesetzt wird, und
e) Feststellung des genannten Materials.

11. Verwendung des Markierungs- oder Etikettierungsmittels der Ansprüche 5 bis 9 bei einem Verfahren zur Markierung durch den Geruchssinn, welches folgendes umfaßt:

a) Identifizierung eines zu markierenden Gegenstands,
b) Zurverfügungstellung eines Markierungsmittels, welches das mikroeingekapselte Mercaptan enthält,
c) Aufbringung des genannten Mittels auf den genannten Gegenstand, wodurch der genannte Gegenstand von nicht so markierten Gegenständen durch den Geruchssinn unterschieden werden kann.

12. Verwendung nach Anspruch 11, dadurch gekennzeichnet, daß der genannte Gegenstand krautartiges Material umfaßt.
13. Verwendung nach Anspruch 12, dadurch gekennzeichnet, daß das genannte krautartige Material Marihuana ist.

14. Verwendung nach Anspruch 11, dadurch gekennzeichnet, daß die genannte Aufbringung die Aufbringung eines Herbicids begleitet.

15. Verwendung des Markierungs- oder Etikettierungsmittels der Ansprüche 5 bis 9 bei einem Verfahren zur Zerstörung des Werts von Marihuana, dadurch gekennzeichnet, daß man auf das genannte Marihuana entweder im Gemisch oder gesondert

a) eine Herbicid und
b) ein Markierungsmittel, welches ein mikroeingekapseltes Mercaptan enthält,

aufbringt.

16. Markierungs- oder Etikettierungsmittel, enthaltend ein Markierungsmaterial, wobei mindestens ein Teil des genannten Materials in die Polymerwände der Mikrokapseln eingearbeitet ist, dadurch gekennzeichnet, daß das genannte Material chemisch mit den genannten Wänden derart zusammenwirkt, daß nach den Bedingungen des Aussetzens an einer vorgewählten Freisetzungsstimulus mindestens ein Teil des genannten Materials eine flüchtige, feststellbare Zusammensetzung freisetzt.

## Revendications

1. Agent marquer ou indicateur comprenant une matière microencapsulée, ladite matière étant au moins partiellement incorporée aux parois polymériques desdites microcapsules, ladite matière étant capable d'être libérée desdites parois lors d'un traitement thermique desdites microcapsules, et ladite matière étant détactable dans la phase gazeuse, caractérisé par le fait que ladite matière est partiellement immobilisée chimiquement dans les parois des microcapsules.

2. Agent suivant la revendication 1, dans lequel ladite matière est détectable sensitivement par des animaux.

3. Agent suivant la revendication 2, dans lequel le moyen de détection est l'olfaction.

4. Agent suivant la revendication 1, dans lequel ledit traitement thermique est une combustion lente.

5. Agent suivant les revendications 1 à 4, dans lequel la matière microencapsulée est un mercaptan, ledit mercaptan ayant au moins deux groupes sulfhydryle.

6. Agent suivant la revendication 5, dans lequel ledit mercaptan est choisi dans le groupe comprenant le di-mercaptan du d-limonène' le n-nonanedithiol; le 1,4-butanedithiol; le dimercaptopropanol; le 4-chloro-m-benzènedithiol; le 1,6-hexanedithiol; l'alpha, alpha'-dithiol du durène; l'alpha, alpha'-dimercapto-p-xylène; la 2,3-dimercapto-5-methyl-pyrimidine; et le 2,5-dimercapto-1,3,4-thiadiazole.

7. Agent suivant la revendication 5, dans lequel ledit mercaptan est le dimercaptan du d-limonène.

8. Agent suivant la revendication 5, dans lequel la sensation olfactive est facilitée par combustion lente ou exposition à un chauffage sans combustion.

9. Agent suivant les revendications 5 à 8, dans lequel ledit mercaptan a été incorporé à un degré sensible à la paroi cellulaire desdites microcapsules.

10. Utilisation de l'agent marqueur ou indicateur suivant les revendications 1 à 9 dans un procédé de marquage comprenant:

a) le choix d'une matière que est détectable dans la phase gazeuse;
b) le microencapsulage de ladite matière de manière qu'une portion au moins de ladite matière soit incorporée chimiquement aux parois polymériques desdites microcapsules;
c) la mise en contact d'un objet à marquer avec ladite matière microencapsulée;
d) le traitement thermique desdites microcapsules, de telle sorte que ladite matière soit libérée des parois desdites microcapsules; et
e) la détection de ladite matière.

11. Utilisation de l'agent marqueur on indicateur suivant les revendications 5 à 9 dans un procédé de marquage olfactif, comprenant:

a) l'identification d'un objet à marquer;
b) le choix d'un agent de marquage comprenant le mercaptan microencapsulé;
c) et l'application dudit agent audit objet, de manière que ledit objet puisse être distingué par olfaction d'objets qui ne sont pas marqués de la sorte.

12. Utilisation suivant la revendication 11, dans laquelle ledit objet comprend une matière herbacée.

13. Utilisation suivant la revendication 12, dans laquelle ladite matière herbacée est la marijuana.

14. Utilisation suivant la revendication 11, dans laquelle ladite application accompagne l'application d'un herbicide.

15. Utilisation de l'agent marqueur ou indicateur suivant les revendications 5 à 9 dans un procédé pour dévaloriser la marijuana, consistant à appliquer à ladite marijuana en mélange ou séparément

a) un herbicide et
b) un agent marqueur comprenant un mercaptan microencapsulé.

16. Agent marqueur ou indicateur comprenant une matière de marquage, une portion au moins de ladite matière étant incorporée aux parois polymériques de microcapsules, caractérisée par la fait que ladite matière exerce une action chimique conjointe avec lesdites parois de manière que, dans des conditions d'exposition à un stimulus de libération prédéterminé, une portion au moins de ladite matière libère une composition volatile détectable.